# EUROPEAN PATENT SPECIFICATION

(11) **EP 1 574 424 B1**
(45) Date of publication and mention of the grant of the patent: **24.09.2008**
(21) Application number: 05003488.3
(22) Date of filing: 18.02.2005
(51) Int. Cl.: B62D 67/00, B62D 65/00

(54) **Motor vehicle dismantling line**
Förderbahn für die Demontage eines Kraftfahrzeugs
Convoyeur pour le désassemblage d'un véhicule

(30) Priority: 20.02.2004 ES 200400420
(43) Date of publication of application: 14.09.2005
(73) Proprietor: TAIM TFG S.A., 50720 Cartuja Baja (Zaragoza) (ES)
(72) Inventor: Giménez Garcés, José Luis, 50720 Cartuja Baja (Zaragoza) (ES); Aznar Villalba Eduardo, 50720 Cartuja Baja (Zaragoza) (ES)
(74) Representative: Schäfer, Matthias W.

(56) References cited:
- EP-A- 0 544 342
- DE-A1- 4 143 251
- DE-A1- 4 333 632
- DE-A1- 19 527 250
- FR-A- 2 760 389
- GB-A- 1 525 848
- NL-A- 9 400 746

## Description

The present description relates, as its title indicates, to a motor vehicle dismantling line, of the type used industrially to recycle motor vehicles taken off the road to allow parts and components to be reused, characterised in that the process is conducted by moving the motor vehicle between the various handling points directly on conveyor chains, and in that it uses one or more external turnover units to lift the motor vehicle from the conveyor line, rotate it and move it to a workstation, also external, where operations to dismantle the bottom part and the engine are conducted, with these turnover units then returning the remnants of the vehicle to the conveyor chains in order to continue with the dismantling process.

Current regulations in various countries, allied to increased concern regarding waste originating from motor vehicles has now created a need to dismantle, decontaminate and attempt to recycle as many parts as possible belonging to motor vehicles taken off the road for whatever reason. Traditionally motor vehicles have been dismantled by hand, an activity largely linked to demand for usable parts.

However, new systems and devices that attempt to conduct this dismantling process in the most industrial and productive way possible have begun to appear. Consequently, arrangements have become known such as that disclosed in European Patent 93200702, "Procedure and device for the dismantling of used motor vehicles", which essentially consists of a special support upon which the motor vehicle remains stationary in the device while personnel work around it, with low productivity being its drawback.

Other systems are also known such as that protected by European Patent 91109649, "Procedure for dismantling a motor vehicle", but have the drawback of only being feasible for separating severely deformed and pre-pressed elements of the motor vehicle, making use of only a small part of its raw materials, without allowing spare parts and devices to be used or recycled, resulting in a very low economic performance and the incomplete recycling of the vehicle.

There are also systems such as that claimed in Patent JP2003170871, "Method of scrapping car", in which the vehicle is opened by means of a lower longitudinal cut made by a saw with elements then being removed by a robotic arm fitted with a saw or welder that automatically selects each part to be recovered; or that protected by Patent JP2003212164, "Method and device for scrapping used cars", in which in a relatively similar way cuts are made by a saw operated by a robotic arm or gantry crane to divide the vehicle into commercially useful and less useful parts before being moved onto different processing lines. The disadvantage of these systems is that they require highly complex and specialised facilities, involving high costs, and furthermore do not enable optimal use of the majority of the vehicle's recyclable parts.

Systems are also used such as that protected by Patent DE4143251, "Verfahren und Vorrichtung zur PKW-Demontage", which consist of a double cutting machine with 90° rotation allowing bodywork to be cut into various fragments, which also has the problem of not enabling optimal use of the majority of the vehicle's recyclable parts. The system claimed in Patent DE19609572, "Car dismantling via connections into single parts", conducts a similar process but by means of pressurised water jet cutting to separate the connections connecting the various elements, with the cutting process being assisted by a manipulator that positions the vehicle at a suitable angle of rotation beforehand, but which presents the same problems as those detailed above.

There are also systems on the market such as that protected by European Patent 93200702, "Verfahren und Vorrichtung zur Demontage von Altautomobilen", consisting of automated lines dismantling external elements by means of robotic actuator arms, with the vehicle being moved along by transporter arms that hold the wheels. The disadvantage of these systems is that they require highly complex and specialised facilities involving high costs, and furthermore do not enable optimal use of the majority of the vehicle's recyclable parts.

Further, systems such as that disclosed in European Patent 92202671, "Method and device for dismantling automobiles", and European Patent 95200931, "Device for scrapping cars", are also widely known and used industrially and are based on dismantling lines in which the vehicles are transported on special platforms, onto which they must be deposited by a special crane or similar device, incorporating as an integral part of the dismantling line run, special cranes to lift up the vehicle so that the bottom part of it can be dismantled, or special rotating devices forming an integral part of the line in order to rotate the vehicle so that the bottom part of it can be removed, which must then be raised by another special crane so that it can be removed from the vehicle. These systems present a series of problems and drawbacks that include the extensive use of cranes which slows the process down thus making it largely unviable from an economic viewpoint, quite apart from the inherent danger they present to personnel and the problem presented by the conveyor platforms, which after being used must be folded before being returned to their point of origin, causing a further slowdown as well as greatly complicating the mechanics and functioning. The presence of the turnover device in the dismantling line also presents a significant problem; as the vehicle is being turned over and work is conducted on the bottom part, the rest of the vehicles on the line must stop, thus impacting negatively on the operating speed and resulting in the low performance of these systems. In addition, its inherent mechanical complexity, both in the conveyor system and the rotation system integrated into the line, generates high costs and a high breakdown rate.

DE 4333632 A1 shows a motor vehicle dismantling line, the type used industrially to recycle motor vehicles taken off the road to allow parts and components to be reused. This dismantling line is using parallel conveyer chains for transporting the cars to be dismantled. The conveyer chains are arranged on the ground level of the facility. The conveyer chains are arranged above pits. This way, no turn over units are needed. Only a full gantry crane is provided to lift the cars vertically if needed. The dismantling of parts underneath the car, e.g. the catalytic converter, is entirely executed on the lower work level, i.e. in the pit.

FR 2760389 A1 discloses a vertical lifting and turn over unit. This turn over unit is rotateably arranged on a vertical pole. This way, several work stations can be arranged in a circle to entirely dismantle the car. According to the disclosure of FR 2760389 A1, the rotateabel turn over units have been chosen to explicitly avoid transportation of the cars on conveyer lines.

To address current problems in the dismantling and recycling of motor vehicles, the motor vehicle dismantling line that is the object of this invention has been designed and consists of an operating line comprising a preferably metallic fixed structure, considerably longer than it is wide, and which comprises two parallel conveyor chains running longitudinally and fitted with the appropriate motor or motors and the corresponding planetary gears, automatically transporting the vehicles all the way along the line. On either side of the conveyor structure several regularly spaced specialised dismantling stations are located and possess the requisite tools, containers and personnel to dismantle one or more specific elements of the vehicle.

The vehicle to be dismantled is positioned at the front of the line in the positioning area, being deposited by a fork-lift truck directly onto some load supports, which are synchronised with the movement of the conveyor chain and by means of a simple device they descend to allow the bottom part of the vehicle bodywork to rest directly on the top part of the conveyor chain links, which move to transport the vehicle all the way along the dismantling line. The conveyor chains are positioned at the requisite distance depending on the vehicles to be dismantled.

In this way the conveyor chains automatically move the vehicle, which thus passes through the various dismantling workstations where the operators remove, in different phases, the various elements of the vehicle.

Towards the start of the second half of the line, to the sides and at a certain distance from it, can be found separate turnover units whose function it is to take a vehicle from the conveyor line, hold it, lift it up and, by means of a rotating movement, transfer it to dismantling workstations that are external to the conveyor line and which specialise in working on the bottom part of the vehicle. At the same time as this movement occurs, the unit itself rotates upon the longitudinal axis of the vehicle in such a way that the vehicle is rotated 90°/180° (depending on the method) at approximately the point at which it reaches the external dismantling workstation, being held in a fixed position so that the personnel manning these stations can carry out operations on the bottom part, such as releasing the attachment points of the engine, the gearbox and the transmission, and dismantling the exhaust pipe, catalytic converter etc. The turnover unit is equipped to rotate the vehicle upon its longitudinal axis at any angle, keeping it in this position to allow easy access for personnel and to adapt to any type of particular dismantling needs concerning the vehicles that may appear.

Once the personnel have released the lower attachment points of the engine, gearbox and transmission, etc. every turnover unit, in the same workstation or in another, depending on the operation, rotates the vehicle on its longitudinal axis again until it returns to its original angle positioned above a collector tray onto which, following operations to detach these elements from the bodywork, the engine, gearbox and transmission, etc. are deposited before being transported on said collector tray by a fork lift tray to an additional auxiliary dismantling position or to their final destination.

The turnover unit continues to rotate in order to move the vehicle, which now consists of bodywork with few remaining elements, until it deposits it once more on the conveyor chains in the line, in a position more advanced than the one it occupied previously, so that the process of conveying it through the remaining dismantling workstations can continue.

To achieve this, the turnover unit is constructed in the form of a tower, provided with rotating movement in relation to its vertical axis, and equipped on one side with a lifting device that causes the independent vertical rising and descending movement of a side arm. In addition, this side arm is provided with rotating movement in relation to a horizontal axis situated at the point of connection with the lifting device. On the other end of the arm there is a fastening claw for the vehicle, connected to the arm through another additional axis of rotation. This claw consists of two arms, the ends of which are equipped with wedges that hold the vehicle firmly from the sides and the bottom part without any risk of it falling while being turned over, and which are operated by conventional-type hydraulic, pneumatic or electrical devices.

Depending on the required production rate of the dismantling line one or more turnover units can be installed adjacent to the conveyor chain with their corresponding external dismantling workstations. The number of dismantling phases and associated workstations can also be varied without difficulty, adapting it easily to every specific type of facility.

At the rear of the line there is a vehicle removal area consisting of load supports similar to those located at the front of the line and which lift up the final remnants of the vehicle, usually the bodywork itself, from the links on the conveyor chains so that they can be collected by a fork lift truck and deposited in their final destination.

The dismantling phases can be divided in various ways in accordance with the particular specifications and specific needs of each particular dismantling line set-up. A preferred example of the various dismantling phases is:
- PHASE 1 - Removal of window glass, doors, front bonnet, rear bonnet, external lights, and rubber from the window frames.
- PHASE 2 - Removal of seats, upholstery and bumpers.
- PHASE 3 - Removal of airbag, inertia-reel seatbelts and dashboard.
- PHASE 4 - Releasing of lower attachment points, engine, gearbox and transmission. Dismantling of exhaust pipe and catalytic converter.
- PHASE 5 - Releasing of upper attachment points, shock absorbers, and removal of engine and transmission.
- PHASE 6 - Removal of rest of parts, cables, heating, radiators and tanks.

The motor vehicle dismantling line presented herein provides numerous advantages over the systems currently available, the most important of which is that since the vehicles are transported directly on the conveyor chain, complex conveyor platforms, which make the line more expensive and complex, are not required, thus resulting in a mechanically simpler and therefore more inexpensive dismantling line.

Another important advantage is that the elevating load supports at the front and rear of the line enable the vehicle to be carried and the bodywork removed with a fork lift truck only, doing away with the need for expensive lifting or gantry cranes.

Another advantage of the present invention is that the turnover units enable the vehicle-holding, lifting, transfer and rotation movements to be conducted simultaneously in a coordinated way.

Another of the most noteworthy advantages is that the turnover unit is used to dismantle the vehicle, remove the engine, gearbox and transmission, and return the bodywork to the line without the need for cranes, thus simplifying the whole process greatly and optimising removal time.

It should be pointed out that the versatility of the turnover unit means that it can perform either 90° turnovers if removal is to be conducted at a single workstation, or 180° turnovers if removal is to be conducted at multiple workstations, and it is also capable of adapting to any intermediate angle of rotation that may be needed to dismantle any vehicle or perform any operation in particular.

In addition another added advantage is that as the most dangerous tasks are performed in an area separated from the conveyor line, and since the motor vehicle is held firmly by the turnover unit, the risk of personnel suffering accidents is greatly reduced, thereby improving overall safety at the facility.

Finally, we should mention the significant advantage represented by having the turnover units located externally to the conveyor chain, since this allows more than one turnover unit to be installed, thus reducing process times, increasing the speed of the dismantling line and eliminating downtime, making it easily adaptable to the specific needs of each dismantling plant.

Finally, it should be remembered that all these improvements and mechanical simplifications result in a more economical, more productive dismantling line with less breakdowns and maintenance work.

To provide a better understanding of the present invention, the plan attached details a preferred practical embodiment of an example of a motor vehicle dismantling line.

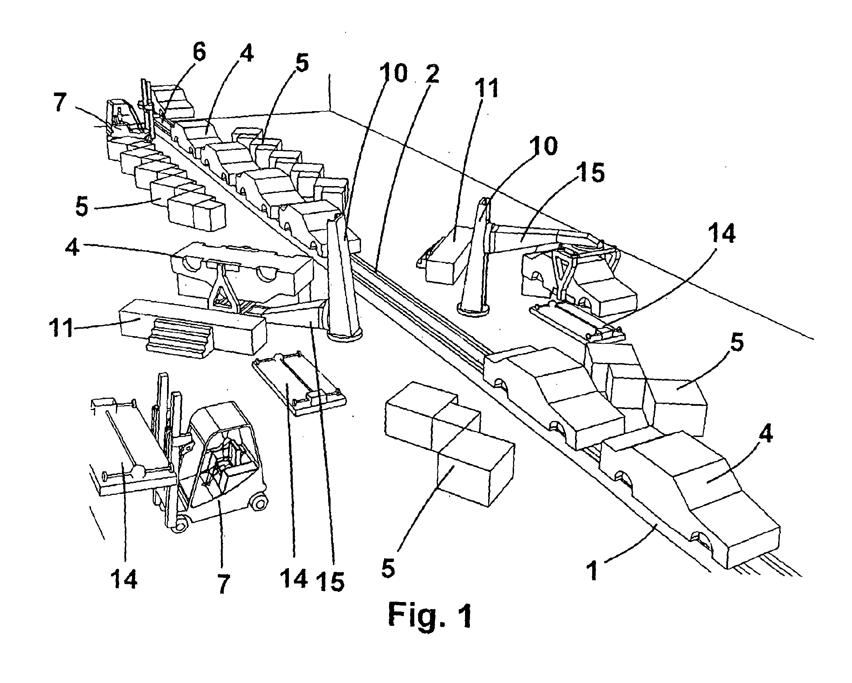

In said plan figure 1 shows a generic view in perspective of the whole line.

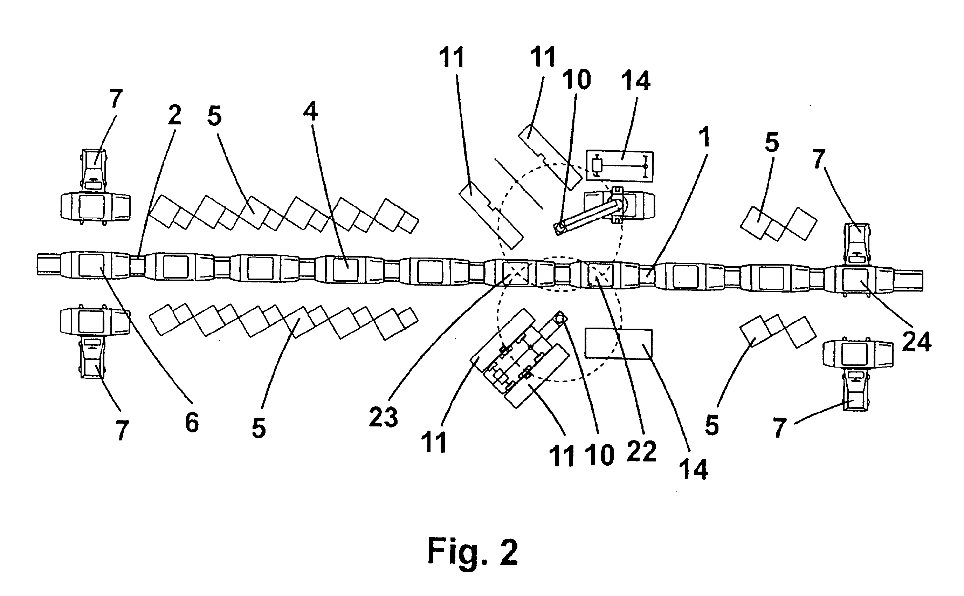

Figure 2 shows a ground view of the line.

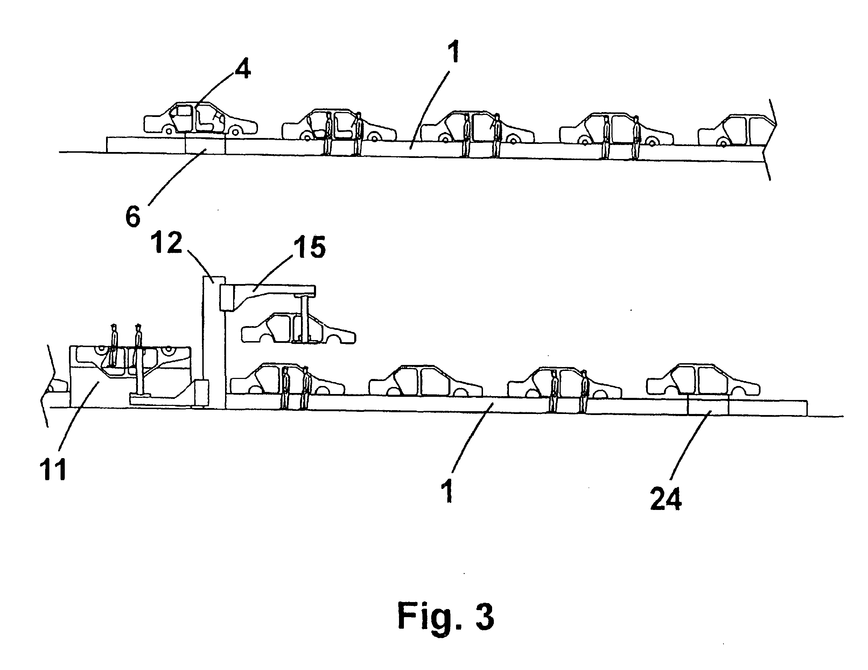

Figure 3 shows a side view of the line, divided into two to increase the scale of the drawing and make it easier to understand.

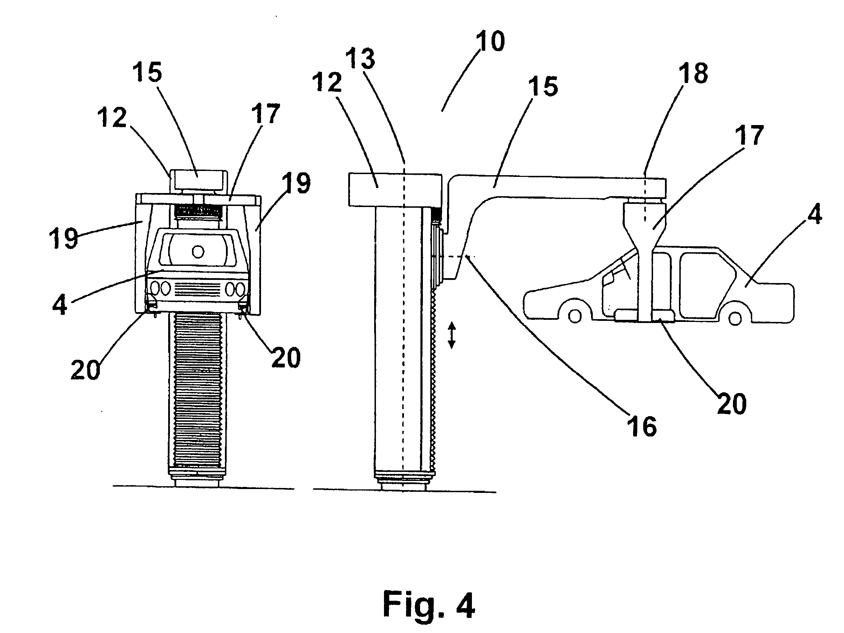

Figure 4 shows a front and profile view of a turnover unit holding and lifting a vehicle.

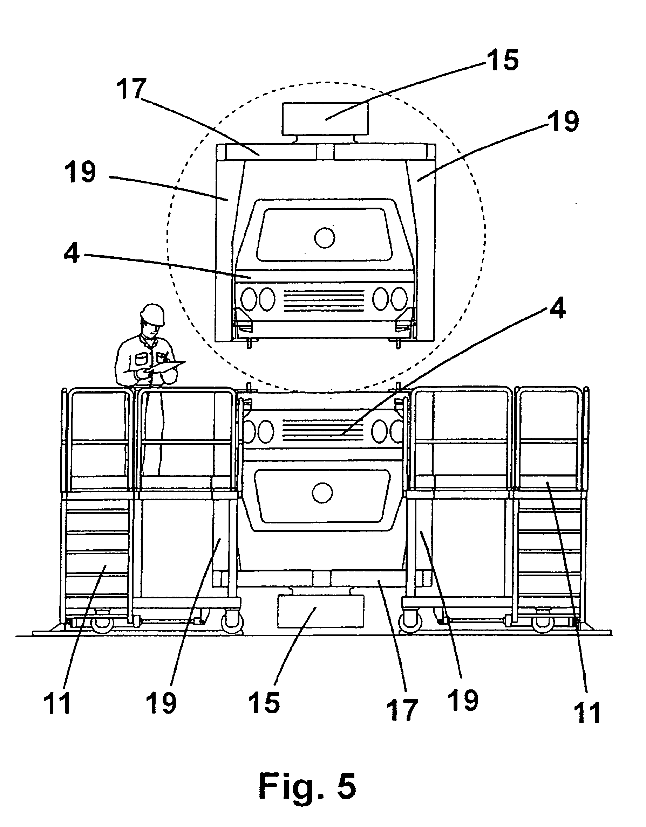

Figure 5 shows a view of an external dismantling workstation for work on the bottom part, with a motor vehicle rotated 180°.

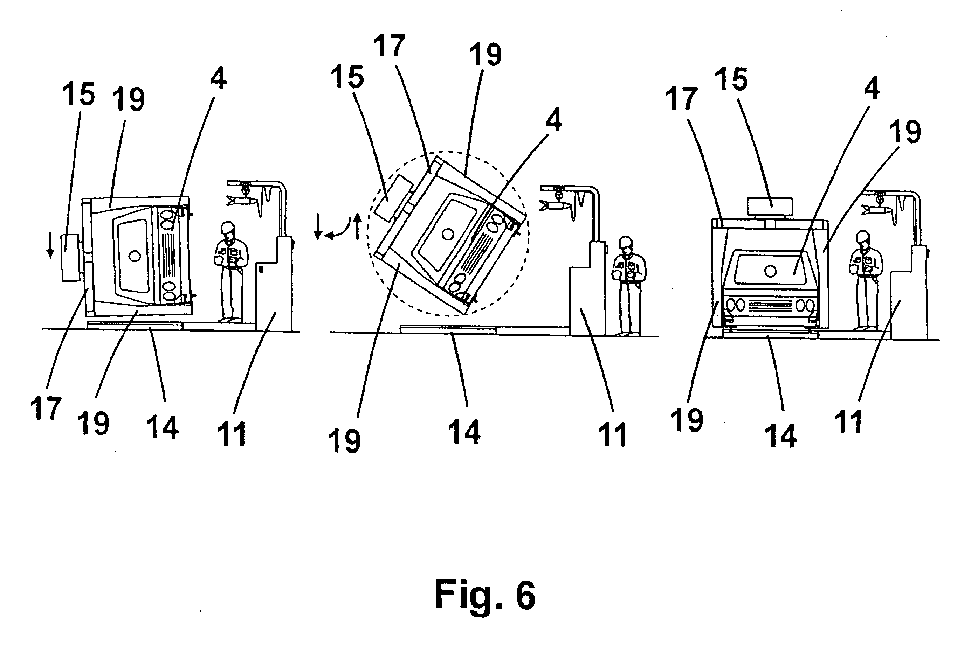

Figure 6 shows a standard external dismantling workstation with a motor vehicle rotated at 90° and in different positions to facilitate operations at a single workstation.

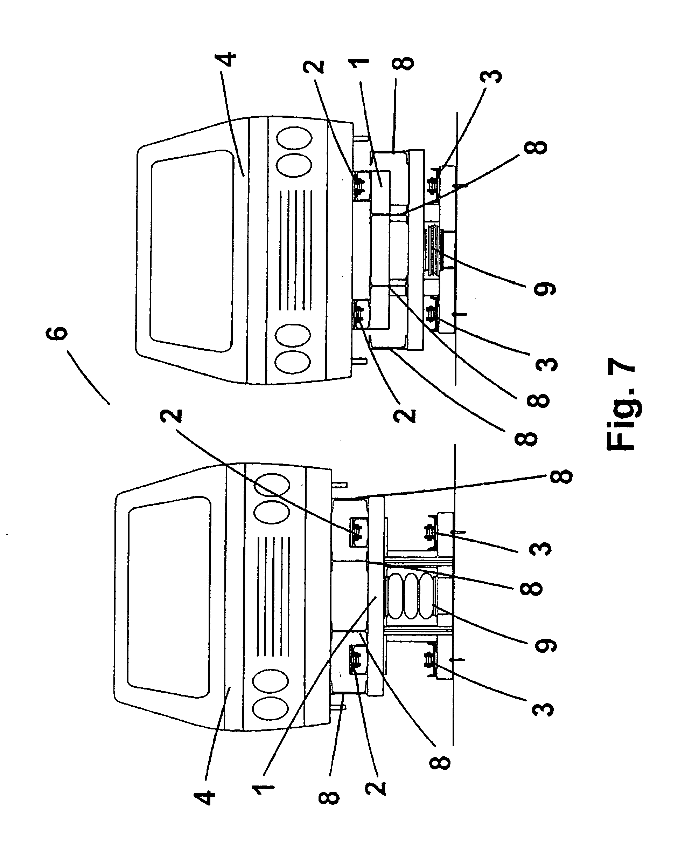

Figure 7 is a sectional view of the operating sequence of the load supports in the positioning area at the front of the line.

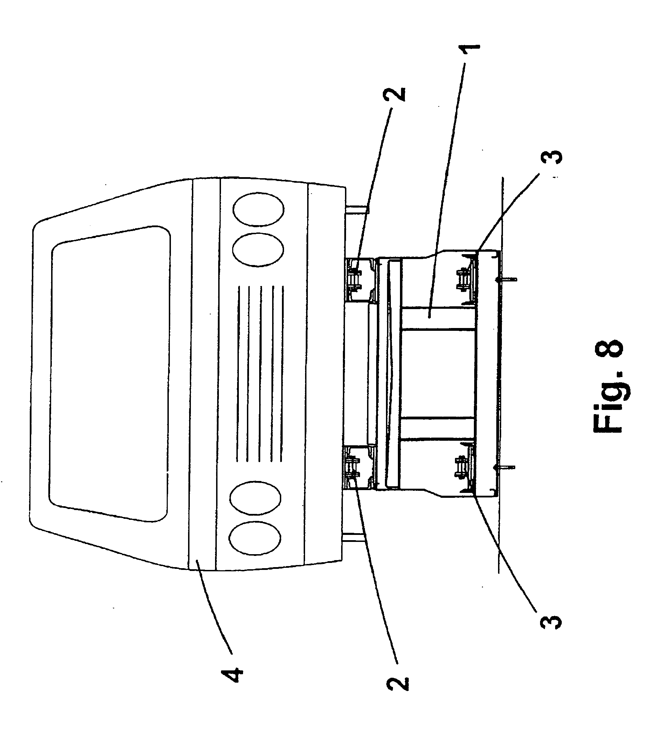

Figure 8 is a sectional view of the position of the vehicle above the conveyor chains.

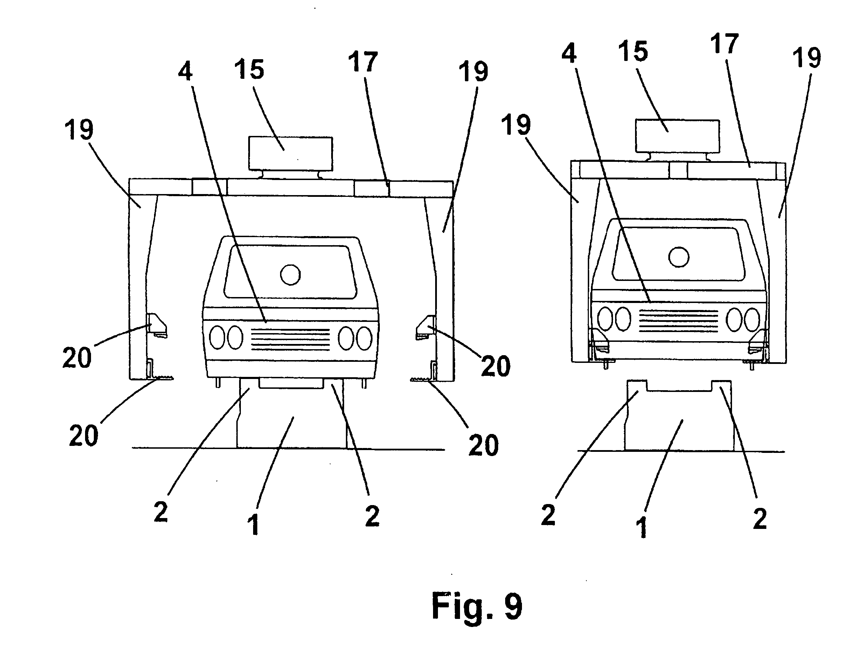

Figure 9 shows a close up of the sequence wherein the claw on the turnover unit attaches itself onto the vehicle and lifts it onto the conveyor line, and then returns it.

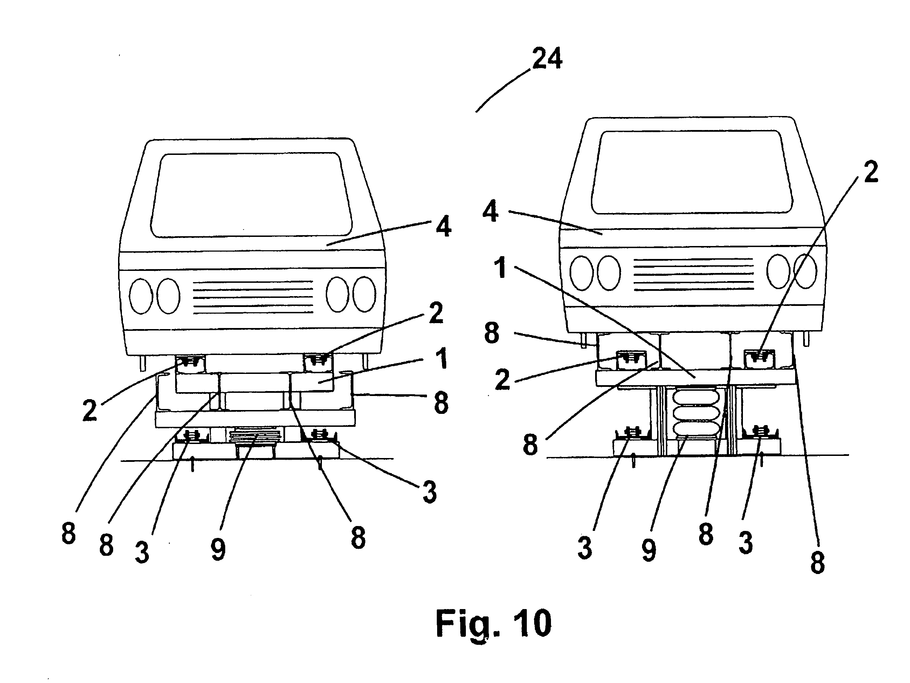

Figure 10 shows a sectional view of the operating sequence of the load supports in the vehicle removal area at the rear of the line.

The motor vehicle dismantling line that is the object of the present invention, is essentially formed, as can be seen in the drawing attached, by a preferably metallic fixed structure (1), considerably longer than it is wide, and which comprises two parallel conveyor chains (2) running longitudinally and fitted with the appropriate motor or motors and the corresponding planetary gears (3), automatically transporting the vehicles (4) all the way along the line. On either side of the structure (1) several regularly spaced, specialised dismantling workstations (5) are located.

The vehicle (4) to be dismantled is positioned at the front of the line in the positioning area (6) being deposited by a fork lift truck (7) directly onto some load supports (8) which, in their raised position receive the vehicle from the fork lift truck, and by means of a simple device (9) deposit the vehicle (4) directly onto the conveyor chains (2).

Towards the start of the second half of the line, to the sides and at a certain distance from it, can be found separate turnover units (10) whose function it is to take a vehicle (4) from the conveyor line, hold it, lift it up and, by means of a rotating movement transfer it to the external dismantling workstations (11). Each turnover unit is constructed in the form of a tower (12), provided with rotating movement in relation to its vertical axis (13) and equipped with a lifting device that causes the independent vertical rising and descending movement of a side arm (15). In addition this side arm (15) is provided with rotating movement in relation to a horizontal axis (16) situated at the point of connection with the lifting device. On the other end of the side arm (15) there is a fastening claw (17) for the vehicle, connected to the side arm (15) through another additional axis of rotation (18). This fastening claw (17) consists of two clamping arms (19) the ends of which are equipped with wedges (20) that hold the vehicle (4) firmly from the sides and the bottom part without any risk of it falling while being turned over, and which are operated by conventional-type hydraulic, pneumatic or electrical devices.

Once the personnel have released the attachment points of the engine, gearbox and transmission, etc. each turnover unit lifts the vehicle up again and transports it to an unloading area situated within its radius of action, where it rotates the vehicle on its longitudinal axis again until it returns to its original angle positioned above a collector tray (14) onto which the engine, gearbox and transmission, etc. are deposited before being transported on said collector tray (14) by a fork lift truck (7) to an additional auxiliary dismantling workstation or to their final destination. The turnover unit (10) continues to rotate, moving the vehicle (4) until depositing it once more on the conveyor chains in the line, in a position (22) more advanced than the one it occupied previously (23) so that the process of conveying it through the remaining dismantling workstations can continue.

At the rear of the line is situated a vehicle removal area (24) consisting of load supports similar to those located at the front of the line.

It was decided to omit a detailed description of the other particular features of the system being disclosed or of the components forming part of it, as it was felt that the rest of said particular features are not the object of any claims.

Having described the nature of the present invention in sufficient detail, in addition to the means of putting it into practice, all that remains to be added is that its description is not restrictive, and that variations both in materials and shapes and sizes can be made provided that said variations do not alter the essential nature of the characteristics claimed below.

## Claims

1. Motor vehicle dismantling line, of the type used industrially to recycle motor vehicles taken off the road to allow parts and components to be reused, consisting of a metallic fixed structure (1), extending longer than wide, and comprising two parallel conveyor chains (2) running longitudinally and fitted with the appropriate motor or motors and the corresponding planetary gears (3), automatically transporting the vehicles (4) all the way along the line, and with various dismantling workstations (5) being located on either side of the structure (1),
**characterised in that**
it comprises one or more separate turnover units (10) situated at around the start of the second half of the structure (1), to the sides and at a certain distance from it, constructed in the form of a tower (12), provided with rotating movement in relation to its vertical axis (13) and equipped with a lifting device that causes the independent vertical rising and descending movement of a side arm (15), and which is provided with rotating movement in relation to a horizontal axis (16) situated at the point of connection with the lifting device.

2. Motor vehicle dismantling line according to the preceding claim, wherein it comprises at the front of the structure (1) load supports consisting of rails (8) which when raised receive the vehicle from a fork lift truck (7), before descending in synchronisation with the conveyor chain by means of a device (9), depositing the vehicle (4) directly on the conveyor chains (2).

3. Motor vehicle dismantling line according to the preceding claims, wherein it comprises at the rear of the structure (1) load supports consisting of rails (8) which when raised lift up the bodywork and other remnants of the vehicle onto the conveyor chains (2) so that they can be collected by a fork lift truck (7).

4. Motor vehicle dismantling line according to the preceding claims, wherein the conveyer chains (2) are provided for transporting the vehicle (4) directly all the way along the structure (1), wherein the vehicle being held in position by its own weight.

5. Motor vehicle dismantling line according to the preceding claims, wherein the turnover units (10) comprise at the other end of the side arm (15) a fastening claw (17) for the vehicle, connected to the side arm (15) through another additional axis of rotation (18) formed by two clamping arms (19), the ends of which are equipped with wedges (20) holding the vehicle (4) firmly from the sides and the bottom part without any risk of it falling when being turned over, and which are operated by conventional-type hydraulic, pneumatic or electrical devices.

6. Process for dismantling a motor vehicle using a motor vehicle dismantling line according to the preceding claims, wherein each turnover unit (10) takes a vehicle (4) from the conveyor line, holds it, lifts it up and, by means of a rotating movement transfers it to the external dismantling workstations (11).

7. Process for dismantling a motor vehicle according to claim 6, wherein once the personnel at the external dismantling workstations (11) have released the attachment points of the engine, gearbox and transmission, etc., each turnover unit (10) lifts the vehicle (4) up again and transports it to an unloading area situated within its radius of action, where it rotates the vehicle (4) on its longitudinal axis again until it returns to its original angle positioned above a collector tray (14) onto which following the operations to detach these elements from the bodywork, the engine, gearbox and transmission, etc. are deposited before being transported by a fork lift truck (7) to an additional auxiliary dismantling workstation or to their final destination.

8. Process for dismantling a motor vehicle according to claim 6, wherein each turnover unit (10) continues to rotate moving the vehicle (4) until depositing it once more on the conveyor chains in the line, in a position (22) more advanced than the one it occupied previously (23) so that the process of conveying it through the remaining dismantling workstations can continue.

## Patentansprüche

1. Linie zum Zerlegen von Kraftfahrzeugen, des industriell benutzten Typs zum Rezyklieren von Kraftfahrzeugen, die von der Straße genommen wurden, um eine Wiederverwendung von Teilen und Bauteilen zu ermöglichen, bestehend aus einer metallischen Feststruktur (1), die sich länger als breit erstreckt, und die zwei parallele Transportketten (2) aufweist, die in Längsrichtung laufen und mit geeignetem Motor oder Motoren und zugehörigen Planetengetrieben (3) ausgerüstet sind, die automatisch die Fahrzeuge (4) den ganzen Weg entlang der Linie befördern, und mit verschiedenartigen Zerlege-Werkstationen (5), die zu jeder Seite der Struktur (1) angeordnet sind,
**dadurch gekennzeichnet, dass**
die Linie eine oder mehrere separate Umdreheinheiten (10) aufweist, die um den Beginn der zweiten Hälfte der Struktur (1), an den Seiten und in einem bestimmten Abstand davon sitzen, gebaut in der Gestalt eines Turms (12), der mit einer Drehbewegung bezüglich seiner vertikalen Achse (13) vorgesehen ist, sowie mit einer Hebevorrichtung ausgestattet ist, welche die unabhängige vertikale Anhebe-und Absenk-Bewegung eines Seitenarms (15) veranlasst, und die mit einer Drehbewegung bezüglich einer horizontalen Achse (16) versehen ist, die an der Stelle der Verbindung mit der Hebevorrichtung liegt.

2. Linie zum Zerlegen von Kraftfahrzeugen nach dem vorangehenden Patentanspruch, die vom an der Struktur (1) Laststützungen aufweist, die aus Schienen (8) bestehen, die beim Anheben das Fahrzeug von einem Gabelstapler (7) aufnehmen, bevor sie in Synchronisation mit der Transportkette mittels einer Vorrichtung (9) absinken, wobei das Fahrzeug (4) direkt auf die Transportketten (2) abgesetzt wird.

3. Linie zum Zerlegen von Kraftfahrzeugen nach den vorhergehenden Patentansprüchen, die hinten an der Struktur (1) Laststützungen aufweist, die aus Schienen (8) bestehen, welche beim Anheben die Karosserieteile und andere Restteile des Fahrzeugs auf die Transportketten (2) heben, so dass die Teile von einem Gabelstapler (7) gesammelt werden können.

4. Linie zum Zerlegen von Kraftfahrzeugen nach den vorhergehenden Patentansprüchen, worin die Transportketten (2) zum Befördern des Fahrzeugs (4) direkt den ganzen Weg entlang der Struktur (1) eingerichtet sind, und wobei das Fahrzeug durch sein Eigengewicht in Position gehalten wird.

5. Linie zum Zerlegen von Kraftfahrzeugen nach den vorhergehenden Patentansprüchen, worin die Umdreheinheiten (10) am anderen Ende des Seitenarms (15) eine Halteklaue (17) für das Fahrzeug aufweisen, die an den Seitenarm (15) durch eine weitere zusätzliche Drehachse (18) angebunden ist, die durch zwei Klemmarme (19) gebildet wird, deren Enden mit Keilen (20) ausgestattet sind, die das Fahrzeug (4) fest von den Seiten und dem Unterteil her halten, ohne irgendein Risiko, dass das Fahrzeug beim Umkehren fällt, und die durch herkömmliche hydraulische, pneumatische oder elektrische Vorrichtungen betrieben werden.

6. Verfahren zum Zerlegen eines Motorfahrzeugs unter Gebrauch einer Linie zum Zerlegen von Kraftfahrzeugen nach den vorhergehenden Patentansprüchen, worin jede Umdreheinheit (10) ein Fahrzeug (4) von der Transportlinie nimmt, es hält, hochhebt, und mittels einer Drehbewegung zu den außenliegenden Zerlege-Werkstationen (11) befördert.

7. Verfahren zum Zerlegen eines Motorfahrzeugs nach Patentanspruch 6, worin, sobald das Personal an den außenliegenden Zerlege-Werkstationen (11) die Befestigungsstellen des Motors, des Getriebekastens und der Transmission usw. gelöst haben, jede Umdreheinheit (10) das Fahrzeug (4) erneut anhebt und es zu einem Abladebereich befördert, der innerhalb ihres Wirkungsradius liegt, wo sie das Fahrzeug (4) erneut auf ihrer Längsachse dreht, bis sie zu ihrem ursprünglichen Winkel rückkehrt, der oberhalb eines Sammeltrogs (14) positioniert ist, auf den nach den Tätigkeiten zum Abnehmen dieser Bauelemente von der Karosse der Motor, der Getriebekasten und die Transmission usw. abgelegt werden, bevor diese durch einen Gabelstapler (7) zu einer zusätzlichen Zerlege-Werkstation oder zum Endbestimmungsort abtransportiert werden.

8. Verfahren zum Zerlegen eines Kraftfahrzeugs nach Patentanspruch 6, worin jede Umdreheinheit (10) das Drehbewegen des Fahrzeugs (4) fortsetzt, bis es noch einmal auf die Transportketten in der Linie abgesetzt wird, in eine Position (22), die gegenüber der vorher eingenommenen Position (23) weiter voran gelegt ist, so dass sich der Transportvorgang durch die übrigen Zerlege-Werkstationen fortsetzen kann.

## Revendications

1. Chaine de démantèlement de véhicules à moteur, du type de celles utilisées par l'industrie pour le recyclage des véhicules retirés de la circulation permettant la réutilisation de pièces et de composants, comprenant une partie métallique fixe (1) qui s'étend davantage en longueur qu'en largeur et deux tapis roulants parallèles (2) se déplaçant de manière longitudinale et équipés du moteur ou des moteurs approprié(s) et des engrenages planétaires (3) transportant automatiquement les véhicules (4) tout le long de la chaine, et comportant différents postes de démantèlement (5) situés de part et d'autre de la structure (1),
**caractérisée en ce que**
elle comprend une ou plusieurs unités de retournement (10) situés approximativement au début de la deuxième moitié de la structure (1), sur les côtés de celle-ci et à une certaine distance de celle-ci, présentant la forme d'une tour (12) capable de réaliser un mouvement de rotation par rapport à son axe vertical (13) et équipée d'un dispositif de levage entrainant le levage et la dépose verticale indépendante à l'aide d'un bras latéral (15) et qui est capable d'effectuer un mouvement de rotation par rapport à son axe horizontal (16) situé au point de connexion avec le dispositif de levage.

2. Chaine de démantèlement de véhicules à moteur selon la Revendication précédente comprenant, à l'avant de la structure (1), des supports de chargement comprenant des rails (8) qui, lorsqu'ils sont levés, reçoivent le véhicule chargé à l'aide d'un chariot élévateur (7) et le déposent, de manière synchronisée avec le tapis roulant, à l'aide d'un dispositif (9) déposant le véhicule (4) directement sur le tapis roulant (2).

3. Chaine de démantèlement de véhicules à moteur selon les Revendications précédentes comprenant, à l'arrière de la structure (1), des supports de chargement comprenant des rails (8) qui, lorsqu'ils sont levés, soulèvent la carrosserie et d'autres restes du véhicule sur les tapis roulants (2) de manière qu'ils puissent être collectés par un chariot élévateur (7).

4. Chaine de démantèlement de véhicules à moteur selon les Revendications précédentes dont les tapis roulants (2) sont prévus pour transporter les véhicules (4) directement tout le long de la structure (1) et **caractérisée en ce que** le véhicule est maintenu en position par son propre poids.

5. Chaine de démantèlement de véhicules à moteur selon les Revendications précédentes dont les unités de retournement (10) comprennent, à l'autre extrémité du bras latéral (15), une pince de serrage (17) pour le véhicule connectée au bras latéral (15) par un autre axe de rotation additionnel (18) formé par deux bras de maintien (19) dont les extrémités sont équipées de cales (20) maintenant le véhicule (4) fermement par les côtés et par la face inférieure éliminant le risque qu'il ne tombe lorsqu'il est retourné, et qui sont opérés par des dispositifs hydrauliques, pneumatiques ou électriques.

6. Procédé de démantèlement de véhicules à moteur utilisant une chaine de démantèlement selon les Revendications précédentes **caractérisé en ce que** chaque unité de retournement (10) prend un véhicule (4) de la chaine, le maintient, le soulève et le transfère jusqu'aux postes de démantèlement externes par un mouvement de rotation.

7. Procédé de démantèlement de véhicules à moteur selon la Revendication 6 où, lorsque le personnel des postes de démantèlement externes (11) a desserré les points d'attache du moteur, de la boîte de vitesses et de la distribution, etc., chaque unité de retournement (10) soulève à nouveau le véhicule (4) et le transporte jusqu'à une zone de déchargement située à l'intérieur de son rayon d'action et tourne à nouveau le véhicule (4) sur son axe longitudinal jusqu'à ce que le véhicule ait retrouvé son angle d'origine, positionné au-dessus d'un plateau de réception (14) sur lequel, suite aux opérations de détachement, sont déposés des éléments de la carrosserie, du moteur, de la boîte de vitesses, de la transmission, etc. avant d'être transportés par un chariot élévateur (7) jusqu'à un poste de démantèlement additionnel ou à leur destination finale.

8. Procédé de démantèlement de véhicules à moteur selon la Revendication 6 où chaque unité de retournement (10) continue à tourner, déplaçant le véhicule (4) jusqu'à le déposer une fois de plus sur le tapis roulant de la chaîne à un endroit (22) plus avancé que celui où il se trouvait précédemment (23) de manière que le procédé de déplacement du véhicule jusqu'aux postes de démantèlement restants puisse continuer.
